# EUROPÄISCHE PATENTANMELDUNG

(11) **EP 0 787 748 A1**
(43) Veröffentlichungstag der Anmeldung: **06.08.1997**
(21) Anmeldenummer: 97100781.0
(22) Anmeldetag: 20.01.1997
(51) Int. Cl.: C08F 10/10, C08F 4/54

(54) **Verfahren zur Herstellung von Polyisoolefinen mittels neuer Initiatorsysteme vom Metallocen-Typ**

(30) Priorität: 31.01.1996 DE 19603331
(71) Anmelder: BAYER AG, 51368 Leverkusen (DE)
(72) Erfinder: Langstein, Gerhard, Dr., 51515 Kürten (DE); Bochmann, Manfred, Prof. Dr., Cringleford, Norwich NR4 6UP (GB); Dawson, David M., Bourne End, Buckinghamshire (GB)

(57) **Zusammenfassung**

Polyisoolefine werden nach dem erfindungsgemäßen Verfahren hergestellt, indem man Isoolefine gegebenenfalls mit konjugierten oder nicht-konjugierten Dienen und/oder kationisch polymerisierbaren, ein- oder mehrfach ungesättigten Verbindungen bei Temperaturen von -100°C bis +200°C und Drücken von 0,1 bis 100 bar in Lösung, in Suspension oder in Gasphase in Gegenwart eines Initiatorsystems bestehend aus Aluminiumcyclopentadienylverbindungen und Borverbindungen polymerisiert.

## Beschreibung

Die vorliegende Erfindung betrifft ein Verfahren zur Herstellung von Polyisoolefinen durch Polymerisation in Lösung, in Suspension oder in der Gasphase von Isoolefinen, gegebenenfalls in Gegenwart von konjugierten oder nicht-konjugierten Dienen und/oder kationisch polymerisierbaren, ein- oder mehrfach ungesättigten Verbindungen in Gegenwart von neuen Initiatorsystemen. Desweiteren betrifft die vorliegende Erfindung neue Initiator-Systeme für die Polymerisation von Isoolefinen.

Die kationische Polymerisation von Isoolefinen, ganz besonders von Isobuten, ist seit langem bekannt und in zahlreichen Veröffentlichungen beschrieben (siehe z.B. J.P. Kennedy, E. Marechal, Carbocationic Polymerization, 1982, A. Gandini und H. Cheradame in Advances in Polymer Science, Band 34/35 (1980)). Als Initiatoren für die Polymerisation werden nach dem Stand der Technik Lewis-Säuren oder Protonensäuren verwendet. Die Polymerisation wird bevorzugt in Gegenwart von halogenierten Kohlenwasserstoffen, wie Methylchlorid, Methylenchlorid oder Kohlenstofftetrachlorid, durchgeführt.

Nachteilig bei den bekannten Verfahren ist jedoch, daß häufig nur niedermolekulare Polymerisate erhalten werden und die Polymerisation erfolgreich nur bei niedrigen Temperaturen in polaren, insbesondere halogenierten Lösungsmitteln durchzuführen ist. Aus US 5.448.001 ist ein neues Initiatorsystem vom Metallocen-Typ bekannt für die Polymerisation von Isobutenen. Insbesondere soll das neue Initiatorsystem sich für die Herstellung von Butylkautschuk eignen. Nachteilig bei dem in der genannten US-Patentschrift beschriebenen Initiatorsystem vom Metallocen-Typ ist die kostenaufwendige Herstellung der dort beschriebenen Übergangsmetallverbindungen.

Aufgabe der vorliegenden Erfindung ist es nun, einen in wirtschaftlich günstiger Weise herstellbaren Polymerisationsinitiator zur Verfügung zu stellen, mit dem Isoolefine zu hochmolekularen Produkten homo- oder copolymerisiert werden können.

Es wurde nun gefunden, daß hochmolekulare Polyisoolefine bei erhöhten Temperaturen hergestellt werden können, wenn man die Polymerisation der Isoolefine in Gegenwart eines Initiatorsystems durchführt, das auf einer Aluminiumcyclopentadienylverbindung und einer Borverbindung basiert.

Gegenstand der vorliegenden Erfindung ist demnach ein Verfahren zur Herstellung von Polyisoolefinen, das dadurch gekennzeichnet ist, daß man Isoolefine der Formel CH₂=CR¹R² mit R¹ für Methyl und R² für C₁-C₁₀-Alkyl oder C₃-C₁₀-Cycloalkyl, gegebenenfalls mit konjugierten oder nicht-konjugierten Dienen mit 4 bis 20 Kohlenstoffatomen und/oder kationisch polymerisierbaren, ein- oder mehrfach ungesättigten Verbindungen mit 4 bis 20 Kohlenstoffatomen, bei Temperaturen von -100°C bis +200°C und Drücken von 0,1 bis 100 bar in Lösung, in Suspension oder in der Gasphase polymerisiert in Gegenwart von Initiatorsystemen bestehend aus folgenden Komponenten:
A) Cp'₂AlR³ und
B) BR⁴R⁵R⁶,
   worin
   - Cp': ein gegebenenfalls substituierter Cyclopentadienylrest ist,
   - R³: für C₁-C₁₀-Alkyl oder C₃-C₁₀-Cydoalkyl steht und
   - R⁴, R⁵ und R⁶: die Bedeutung von R³ besitzen oder C₆-C₁₈-Arylgruppen darstellen, die ein- oder mehrfach durch Halogen substituiert sein können.

Als Isoolefine werden bevorzugt solche eingesetzt mit R¹ = Methyl und R² = C₁-C₆-Alkyl, wie Methyl, Ethyl und Propyl. Besonders bevorzugt sind Isobuten und 2-Methylbuten-1, insbesondere Isobuten. Als konjugierte oder nichtkonjugierte Diene sind bevorzugt solche mit 4 bis 10, insbesondere 4 bis 6 Kohlenstoffatomen, wie Butadien, Isopren, Piperylen, 2,3-Dimethylbutadien, 2,4-Dimethylpentadien-1,3, Cyclopentadien, Methylcyclopentadien, Limonen, Myrcen und 1,3-Cyclohexadien, bevorzugt Isopren, Piperylen und 2,3-Dimethylbutadien, insbesondere Isopren.

Als weitere copolymerisierbare ein- oder mehrfach ungesättigte organische Verbindungen mit bevorzugt 4 bis 10 Kohlenstoffatomen sind für das erfindungsgemäße Verfahren geeignet: Styrol, p-Methylstyrol und Divinylbenzol, besonders bevorzugt Divinylbenzol.

Bei dem erfindungsgemäßen Verfahren werden die konjugierten oder nichtkonjugierten Diene und/oder die ein- oder mehrfach ungesättigten, organischen Verbindungen in Mengen von 0,01 bis 20 mol-%, bevorzugt in Mengen von 1 bis 10 mol-% einpolymerisiert, wobei die Diene und die mehrfach ungesättigten organischen Verbindungen in jedem Mischungsverhältnis untereinander einpolymerisiert werden können.

Die erfindungsgemäße Polymerisation wird in bekannter Weise in Lösung, Suspension oder in der Gasphase kontinuierlich oder diskontinuierlich, ein- oder mehrstufig, bei einer Temperatur von -100°C bis +200°C, bevorzugt von -100°C bis +100°C, insbesondere -50°C bis +50°C, und bei einem Druck von 0,1 bis 100 bar, bevorzugt 1 bis 50 bar, durchgeführt.

Dabei wird die Initiatorkomponente A) in einer Konzentration von 10⁻³ bis 10⁻⁷, vorzugsweise 10⁻⁴ bis 10⁻⁶ mol/l Reaktorvolumen eingesetzt.

Die Initiatorkomponente B) wird in einem molaren Verhältnis zur Komponente A) von 1:100 bis 10⁴:1, bevorzugt von 1:10 bis 10²:1, ganz besonders bevorzugt von 1:1 bis 10:1 eingesetzt (Komponente B):Komponente A)).

Als gegebenenfalls substituierte Cyclopentadienylreste Cp' der Komponente A) kommen insbesondere in Frage solche der nachstehenden Formel: 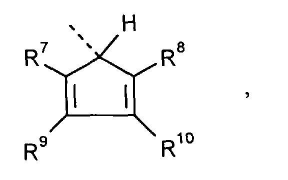 worin
- R⁷ bis R¹⁰: gleich oder verschieden sind und stehen für Wasserstoff, C₁-C₁₀-Alkyl, C₃-C₇-Cycloalkyl, das gegebenenfalls C₁-C₁₀-Alkyl-substituiert sein kann, C₆-C₁₅-Aryl oder -Arylalkyl oder Si(R¹¹)₃, mit R¹¹ für C₁-C₁₀-Alkyl, ganz besonders bevorzugt mit R¹¹ für Methyl.

Als Reste R⁷ bis R¹⁰ der Cyclopentadienylreste kommt insbesondere der Methylrest in Frage.

Als Reste R³ der Komponente A) seien genannt: Methyl, Ethyl, Propyl, Butyl, Pentyl, Hexyl, Octyl, Nonyl sowie Decyl und deren Isomeren, bevorzugt Methyl, Ethyl, n-Propyl, Isopropyl.

Insbesondere werden als Komponente A) des Initiatorsystems eingesetzt: (Cp)₂Al(CH₃).

Als Komponente B) kommen insbesondere solche Borverbindungen in Frage, in denen R⁴, R⁵ und R⁶ für C₆F₅ stehen. Ebenfalls in Frage kommen Arylreste mit CF₃-Substitution, wie

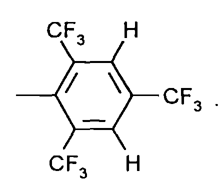

Die Zugabe der Initiatorkomponenten zum Monomergemisch kann gleichzeitig oder nacheinander, kontinuierlich oder diskontinuierlich erfolgen. Die Initiatorkomponenten können auch präformiert werden. Unter Präformierung versteht man die Alterung der Initiatorkomponenten in Abwesenheit der einzusetzenden Monomeren.

Die erfindungsgemäße Polymerisation wird bevorzugt in Lösung oder Suspension durchgeführt. Als Lösungs- oder Suspensionsmittel kommen solche organische Lösungs- oder Suspensionsmittel in Frage, die unter den Reaktionsbedingungen sich inert verhalten, wie Hexan, Isopentan und/oder Toluol, bevorzugt Hexan. Möglich ist auch der Einsatz von Chlorkohlenwasserstoffen, wie Methylenchlorid.

Die günstigste Menge an Lösungs- und/oder Suspensionsmittel kann leicht durch entsprechende Vorversuche ermittelt werden. Sie beträgt im allgemeinen 80 bis 95 Vol.-%, bezogen auf die Summe aus Lösungs- oder Suspensionsmittel und Monomer.

Das erfindungsgemäße Verfahren kann beispielsweise wie folgt durchgeführt werden:
Der auf Reaktionstemperatur gekühlte Reaktor wird z.B. mit gereinigtem Lösungsmittel und den Monomeren beschickt. Nach Temperieren des Reaktors auf die gewünschte Reaktionstemperatur wird ein kleiner Teil der Initiatorkomponente B) zudosiert und mit der Monomermischung gerührt. Anschließend werden die Initiatorkomponente A) und der Rest der Initiatorkomponente B) zudosiert und der Reaktorinhalt kräftig durchmischt. Alle Manipulationen werden unter Schutzgas durchgeführt. Nach Beendigung der exothermen Reaktion wird z.B. mit 2,6-Di-tert.-butyl-4-methylphenol, gelöst in Ethanol, abgestoppt. Der Reaktor wird anschließend entspannt, die anfallende Lösung des Polymeren auf die übliche Art und Weise durch Strippen aufgearbeitet oder, falls gewünscht, in einer nachfolgenden Reaktion einer Halogenierung zugeführt. Auf diese Weise kann das erhaltene Polymer direkt funktionalisiert, d.h. halogeniert werden.

Gegenstand der vorliegenden Erfindung ist auch ein neues Initiatorsystem zur Polymerisation von Isoolefinen, bestehend aus:
A) Cp'₂AlR³ und
B) BR⁴R⁵R⁶,
   worin
   - Cp': ein gegebenenfalls substituierter Cyclopentadienylrest ist,
   - R³: für C₁-C₁₀-Alkyl oder C₃-C₁₀-Cycloalkyl steht und
   - R⁴, R⁵ und R⁶: die Bedeutung von R³ besitzen oder C₆-C₁₈-Arylgruppen darstellen, die ein- oder mehrfach durch Halogen substituiert sein können.

Die Komponente A) des neuen Initiatorsystems ist beispielsweise bekannt aus J.D. Fischer et al., Organometallics 13 (1994) 3324.

Die Komponente B) ist bekannt z.B. aus US 5.448.001.

Die nach dem erfindungsgemäßen Verfahren hergestellten Polyisoolefine besitzen mittlere Molekulargewichte M_{w} von 2 bis 20 000 kg/mol, bevorzugt 20 bis 10 000 kg/mol, ganz besonders bevorzugt 200 bis 800 kg/mol. Die Ausbeuten liegen im allgemeinen über 90 % der Theorie und wurden gravimetrisch bestimmt.

### Beispiele

### Allgemeine Beschreibung der Polymerisationsversuche

Die Polymerisation wird in einem Glasreaktor durchgeführt. Dazu wurden 10 ml Isobuten einkondensiert. Hierzu wurden 50 µmol der Initiatorkomponente B) in 1 ml Lösungsmittel (siehe Tabelle 1) gegeben. Die Mischung wurde nach einminütigem Rühren mit 50 µmol der Initiatorkomponente A) gelöst in 0,5 ml Lösungsmittel, versetzt. Die Polymerisation trat augenblicklich ein. Die Reaktion wurde mit 0,5 ml Methanol gestoppt, das Polymer ausgefällt und bei +60°C getrocknet. Für Copolymerisationsversuche wurden zusätzlich 0,5 ml Isopren zugegeben.

### Herstellung des Initiators

Zu einer Lösung von 400 mg Cp₂Al(CH₃) (2,3 mmol) (= Komponente A)), in 10 ml Dichlormethan, wurden bei -78°C 1,2 g (2,3 mmol) (C₆F₅)₃B (= Komponente B)) gegeben. Das Gemisch wurde 15 Minuten gerührt und die Lösung auf 0°C erwärmt, während man gleichzeitig das Lösungsmittel im Vakuum entfernte. Der weiße, feste Rückstand wurde mit Pentan gewaschen und getrocknet. Man erhielt 1,6 g [Cp₂Al][B(C₆F₅)₃CH₃] (2,3 mmol, 99 % Ausbeute).

### Elementaranalyse:

¹H-NMR (CD₂Cl₂, -60°C): δ 0,55 (s, 3H, Me-B), 705 (s, 10H, Cp).
¹³C-NMR (CD₂Cl₂, -60°C): δ 10,5 (s, Br, Me-B), 114,5 (s, CP).
²⁷Al-NMR (CD₂Cl₂, -20°C): δ -129,35; (Toluol-d₈): δ -127,4, ca. 55

**Tab. 1**

| **Polymerisationsbeispiele** | | | | | | | |
|---|---|---|---|---|---|---|---|
| Versuch | Komp. A (µmol) | Komp. B (µmol) | Temp. (°C) | Zeit (min) | Ausbeute (g) | M_{w} (kg/mol) | M_{w}/Mₙ |
| 1^{a} | 40 | 40 | -78 | 10 | 0,63 | 731 | 3,0 |
| 2^{b} | 38 | 38 | -78 | 10 | 0,28 | 1340 | 3,0 |
| 3 | 50 | 50 | -70 | 10 | 0,30 | 1800 | 2,8 |
| 4 | 100 | 50 | -70 | 10 | 0,02 | 820 | 3,4 |
| 5 | 50 | 50 | -50 | 10 | 0,18 | 618 | 2,0 |
| 6 | 50 | 50 | -30 | 10 | 0,08 | 318 | 1,8 |
| 7 | 50 | 100 | -30 | 10 | 0,03 | 337 | 1,8 |
| 8 | 50 | 50 | -25 | 10 | 0,05 | 289 | 1,6 |
| Versuche 3 bis 8: Lösungsmittel: 1,5 ml Dichlormethan; | | | | | | | |

| | | | | | | | |
|---|---|---|---|---|---|---|---|
| ^{a} Toluol, | | | | | | | |
| ^{b} Methylcyclohexan | | | | | | | |

## Patentansprüche

1. Verfahren zur Herstellung von Polyisoolefinen, dadurch gekennzeichnet, daß man Isoolefine der Formel CH₂=CR¹R² mit R¹ für Methyl und R² für C₁-C₁₀-Alkyl oder C₃-C₁₀-Cycloalkyl, gegebenenfalls mit konjugierten oder nicht-konjugierten Dienen mit 4 bis 20 Kohlenstoffatomen und/oder kationisch polymerisierbaren, ein- oder mehrfach ungesättigten Verbindungen mit 4 bis 20 Kohlenstoffatomen, bei Temperaturen von -100°C bis +200°C und Drücken von 0,1 bis 100 bar in Lösung, in Suspension oder in der Gasphase polymerisiert in Gegenwart von Initiatorsystemen bestehend aus folgenden Komponenten:
A) Cp'₂AlR³ und
B) BR⁴R⁵R⁶,
worin
Cp' ein gegebenenfalls substituierter Cyclopentadienylrest ist,
R³ für C₁-C₁₀-Alkyl oder C₃-C₁₀-Cycloalkyl steht und
R⁴, R⁵ und R⁶ die Bedeutung von R³ besitzen oder C₆-C₁₈-Arylgruppen darstellen, die ein- oder mehrfach durch Halogen substituiert sein können.

2. Neue Initiatorsysteme zur Polymerisation von Isoolefinen bestehend aus:
A) Cp'₂AlR³ und
B) BR⁴R⁵R⁶,
worin
Cp' ein gegebenenfalls substituierter Cyclopentadienylrest ist,
R³ für C₁-C₁₀-Alkyl oder C₃-C₁₀-Cycloalkyl steht und
R⁴, R⁵ und R⁶ die Bedeutung von R³ besitzen oder C₆-C₁₈-Arylgruppen darstellen, die ein- oder mehrfach durch Halogen substituiert sein können.
